# EUROPEAN PATENT APPLICATION

(11) **EP 4 530 209 A1**
(43) Date of publication of application: **02.04.2025**
(21) Application number: 23200037.2
(22) Date of filing: 27.09.2023
(51) Int. Cl.: B65D 1/02, B65D 23/04, B29C 49/04

(54) **CONTAINER, PLANETARY MIXING SYSTEM AND METHOD AND APPARATUS FOR MANUFACTURING A CONTAINER**

(71) Applicant: Gako Deutschland GmbH, 96110 Schesslitz (DE)
(72) Inventor: Konietzko, Matthias, 96110 Scheßlitz (DE)
(74) Representative: Schmitt-Nilson Schraud Waibel Wohlfrom Patentanwälte Partnerschaft mbB

(57) **Abstract**

A container (2) for dissolving and/or homogeneously distributing tablets or capsules in a liquid such as water or syrup, according to the present invention, comprises a bottom portion (12), a wall portion (14), and a top portion (18). The bottom portion (12), the wall portion (14), and the top portion (18) enclose an inner space of the container (2). The wall portion (14) comprises inner ribs (24).

## Description

The present invention relates to a container for dissolving and/or homogeneously distributing tablets or capsules in a liquid such as water or syrup, to a planetary mixing system and to a method and an apparatus for manufacturing a container for dissolving and/or homogeneously distributing tablets or capsules in a liquid such as water or syrup.

Planetary mixing systems, as they are known for example from EP 3 538 071 B1, are often used in combination with containers in order to mix pharmaceutical compositions of pharmacies or the like.

Basically, the revolution and rotation of a mixing container exerts a centrifugal force on the material to be mixed, so that it is mixed homogeneously.

It has been found that the mixing process of such mixing containers and planetary mixing systems often take a comparably long time frame, and that such containers and such planetary mixing systems are not suitable for specific mixing applications, especially for such mixing tasks where tablets or capsules are to be dissolved and/or homogeneously distributed in a liquid such as water or syrup.

Moreover, the manufacturing process of such containers is rather complex and associated with high costs.

It is therefore an object of the present invention to provide a container which accelerates the mixing process, which is suitable for specific mixing applications, especially for mixing tasks where tablets or capsules are to be dissolved and/or homogeneously distributed in a liquid such as water or syrup, and which can be manufactured in a less complex manner and at cheaper cost.

Furthermore, a corresponding, an advantageous planetary mixing system and a corresponding method and a corresponding apparatus for manufacturing such container shall be provided.

These objects are solved completely by the independent claims. Advantageous embodiments are defined in the dependent claims.

According to the present invention, a container for dissolving and/or homogeneously distributing tablets or capsules in a liquid such as water or syrup, is defined in claim 1.

Using such container, tables or capsules can be dissolved and/or homogeneously distributed in a liquid such as water or syrup reliably and quickly. The inner ribs of the wall portion effectively dissolve and homogeneously distribute tablets or capsules in a liquid such as water or syrup.

Although the container according to claim 1 is not limited to being mixed using a planetary mixing system, such planetary mixing system is well suited for the mixing operation for such container.

When the container is subjected to mixing movement, in particular to revolution and rotational movements, for example in planetary mixing systems, a centrifugal force and forces in the directions of the respective revolution and rotation movements are exerted on the material to be mixed.

According to a basic idea of the present invention, the inner ribs of wall portion accelerate and improve the mixing process, so that the material inside the container is mixed more quickly, and a homogeneously mixed material is obtained in a shorter time frame as compared with containers having a plane inner wall.

According to a further basic idea of the invention, the inner ribs of the wall portion also perform a grinding/comminuting action on solid materials contained in the material to be mixed, in particular to tablets or capsules contained in a liquid such as water or syrup, such that these tablets or capsules can be grinded and comminuted and thus dissolved quickly and homogeneously within the liquid.

By the container defined in claim 1, the mixing process is accelerated, facilitated and made more cost effective.

The time frame for dissolving and homogeneously distributing tablets or capsules in a liquid such as water or syrup can be reduced to less than a minute.

There is a substantial time saving compared to the traditional manual dissolving and distributing process in the manufacturing pharmacy using mortar and pestle, where tablets or capsules are first crushed/micronized and only in a further step are added to the dissolving medium or the transport medium and thus mixed homogeneously, which process can take up to 30 minutes, depending on the type and composition of the tablets/capsules.

There is also a substantial time saving compared to traditional containers having a plain inner wall.

Since the container is typically closed during the mixing process, for example by closing its top portion, particularly the inlet/outlet portion of the top portion by a cap or lid, especially by screwing a cap or lid onto an inlet/outlet portion, the material to be mixed can be sealed from the environment thereby preventing that material to be mixed can get out of the container and also preventing that any particles from outside that could contaminate the material to be mixed can get into the container. Therefore, the container meets high safety requirements making it capable of mixing hazardous substances, particularly hazardous tablets/capsules.

The whole mixing operation can be carried out in the container. The need to transfer the material to be mixed from one container to another is eliminated. This contributes to a facilitated mixing procedure. Furthermore, by working in one container the filling, mixing and dispensing steps can be carried out in one container which also reduces the material losses which typically occur during transfer from one container to another, and this also reduces the amount of raw materials to be used. Furthermore, only one container needs to be cleaned after the mixing operation. The container can even be used as a dispensing unit, which is handed out to the patient. In this case no cleaning at all is necessary. Such container is therefore disposable.

Furthermore, the inventor/inventors have found that the container is not only capable to dissolve and homogeneously distribute tablets or capsules in water, but also in syrup.

According to an embodiment, the inner ribs of the wall portion extend at least over a substantial part of the inner height of the wall portion, particularly over the entire height of the inner surface of the wall portion.

According to a further embodiment, the inner ribs of the wall portion are formed as inner longitudinal ribs.

According to a further embodiment, the inner ribs of the wall portion have a straight or slightly curved shape.

According to a further embodiment, the inner ribs of the wall portion are distributed, particularly evenly and/or equidistantly, over the inner surface of the wall portion.

inner ribs of the wall portion that are formed as described above provide particularly advantageous mixing results, they further contribute to accelerating the mixing operation, and they can be manufactured at comparably low cost, using the manufacturing apparatus/method as described below.

According to a further embodiment, at least one of the bottom portion and the top portion also comprises inner ribs.

According to a further embodiment, the inner ribs of the bottom portion and the top portion are aligned with the respective inner ribs of the wall portion.

According to a further embodiment, at least some of the inner ribs of the bottom portion, of the inner ribs of the wall portion and of the inner ribs of the top portion form continuous inner ribs.

The inner ribs at the bottom and/or top portion further contribute to an effective mixing operation.

If the container has an inclined position during the mixing operation, as it is typically the case in planetary mixing systems, the inner ribs of the bottom portion contribute to the mixing and in particular to the grinding/comminuting action onto solid parts like tablets or capsules contained in the material to be mixed. In this case the material to be mixed circulates within the container and is pressed, by centrifugal forces, into the area between the wall portion and the bottom portion of the container, in particular perpendicularly to the axis of rotation. The inner ribs at the wall and bottom portions effectively grind/comminute these tablets or capsules and distribute them within the liquid, in particular the water or syrup.

According to a further embodiment, the inner ribs of the bottom portion extend from a sectional line of the bottom portion, to an outer circumferential edge of the bottom portion to which the wall portion joins.

According to a further embodiment, the inner ribs of the bottom portion extending from a respective outer portion of the sectional line in particular have a curved form, seen in a top view.

According to a further embodiment, the inner ribs of the bottom portion extending from a middle portion of the sectional line in particular have a straight or only slightly curved form, seen in a top view.

According to a further embodiment, the inner ribs of the bottom portion extending from a respective outer portion of the sectional line have a shorter length than the inner ribs of the bottom portion extending from a middle portion of the sectional line.

Such inner ribs of the bottom portion are particularly advantageous. Their form results from the manufacturing apparatus/method as described below.

According to a further embodiment, the inner ribs of the top portion extend in a radial direction, seen in a top view of the container, between an upper circumferential edge of the top portion, to which the wall portion joins, to an inner circumferential edge of the top portion, to which the inlet/outlet portion joins.

According to a further embodiment, the inner ribs of the top portion extending from the edge of the inlet/outlet portion in particular have a straight of only slightly curved form, seen in a top view of the container.

Such inner ribs of the top portion are particularly advantageous. Their form results from the manufacturing apparatus/method as described below.

According to a further embodiment, a continuous welding seam extends over the bottom portion, in particular as a straight diameter line that reaches from one point on the edge of the bottom portion through its centre, over opposing areas of the outer surface of the wall portion, in particular in longitudinal direction, and over the top portion, in particular in radial direction.

According to a further embodiment, the top portion and the wall portion are integrally formed, without a circumferential welding seam.

Such continuous welding seam results from the manufacturing apparatus/process as described below. Since no such circumferential welding seam is present between the top portion and the wall portion the container is distinguished from its appearence alone from a conventional bottle/container consisting of two components that are injection molded, namely the body and the upper part of the body, which are welded together in a second step in order to achieve the tightness of the bottle/container.

The continuous welding seam and the non-presence of a circumferential welding seam result from the manufacturing apparatus/method as described below.

Such container can be manufactured at comparably low cost, the manufacturing is less complex, and the container is disposable.

According to a further embodiment, the top portion comprises an inlet/outlet portion extending away from the inner space of the container. The inlet/outlet portion can have a substantially tubular shape.

Such inlet/outlet portion facilitates filling the material to be mixed into the container, taking the mixed material out of the container and also enables a quick and tight closing and opening of the container.

The inner surface of the inlet/outlet portion can be formed without inner ribs. The fact that the inner surface of the inlet/outlet portion is formed without inner ribs results from the manufacturing apparatus/method as described below.

According to a further embodiment, the wall portion has a cylindrical, conical, oval, belly-formed, convex or concave outer shape. The wall portion can have different shapes resulting from the mold used in the manufacturing apparatus/method.

According to a further embodiment, the wall portion comprises a contoured outer holding section configured to be held by a corresponding holding section of a holding unit of a planetary mixing system. By the contoured outer holding section, the container can be held by/fixed to a corresponding holding section of the holding unit of a planetary mixing system which improves the safety of the mixing process.

According to a further embodiment, the wall portion comprises a scale at its outer surface. By the scale of the wall portion, the need for other measuring cylinders that would otherwise be required can be eliminated.

According to a further embodiment, the container further comprises a cap or lid, in particular an internally threaded cap or lid.

The inlet/outlet portion can comprise an external thread, such that the inner space of the container can be closed by screwing the internally threaded cap or lid onto the external threaded inlet/outlet portion. By such cap/lid, the container can be closed quickly and tightly, and can be opened again quickly.

According to a further embodiment, the inner ribs are configured for grinding or comminuting tablets or capsules.

According to a further embodiment, the container is blade-less. This means that no mixing tool is present or needs to be inserted into the container, which facilitates the mixing operation.

The present patent application also relates to a planetary mixing system as it is defined in claim 11.

Such planetary mixing system in combination with a container according to the present invention as described herein provides quick and excellent mixing results.

In particular if the material to be mixed comprises tablets or capsules in a liquid such as water or syrup, the tablets/capsules are grinded/comminuted quickly by means of the inner ribs of the wall portion and, optionally, by the inner ribs of the bottom portion and/or top portion, and the tablets/capsules are distributed homogeneously within the liquid.

The time frame for the mixing operation can be reduced to typically less than 1 minute.

Such planetary mixing system is typically operated with revolution speeds of 100 to 3000 revolutions per minute.

According to an embodiment of the planetary mixing system, the rotating wheel is arranged substantially horizontally.

According to a further embodiment of the planetary mixing system, the holding unit is arranged and configured such that the container is received and held such that its vertical axis includes an angle with a vertical plane, in particular an angle of 5 to 50°, in particular 25 to 30° with a vertical plane.

If the container is received and held within the holding unit such that its vertical axis includes an angle with a vertical plane as indicated above, the time frame for the mixing operation and the mixing results can be further improved.

For containers having the shape of a truncated cone or a funnel shape, lower rotational and revolution speeds and/or less inclined positions are sufficient, compared with containers having a substantially cylindrical shape, in order to achieve good mixing results.

The material to be mixed is pressed, by centrifugal forces, into the area between the bottom portion and the wall portion of the container, and the inner ribs at the bottom portion and the wall portion contribute to the mixing operation.

In case that tablets or capsules are present within a liquid such as water or syrup these capsules/tablets are grinded/comminuted quickly and reliably by these inner ribs.

The present invention also relates to a method for dissolving and/or homogeneously distributing tablets or capsules in a liquid such as water or syrup, using a container, in particular a container as described herein, and a planetary mixing system, in particular a planetary mixing system as described herein, according to claim 13.

The advantages and embodiments of this method correspond to the advantages and embodiments as indicated above with respect to the planetary mixing system and with respect to the container. They are not repeated here for brevity.

The container can be closed after the step of putting tablets or capsules and a liquid such as water or syrup into the same, by screwing a lid/cap onto the inlet/outlet portion.

During the imparting of the revolution and rotational movements to the container, the container can be placed, received and safely held in place within a holding unit of the planetary mixing system such that its vertical axis includes an angle with a vertical plane as indicated above.

The invention also relates to a method for manufacturing a container for dissolving and/or homogeneously distributing tablets or capsules in a liquid such as water or syrup, as described herein, as defined in claim 14.

The invention also relates to an apparatus for manufacturing a container for dissolving and/or homogeneously distributing tablets or capsules in a liquid such as water or syrup, as described herein, as defined in claim 15.

Using such apparatus/such method a hollow preform tube is first extruded and then blown through a blow nozzle while it is still warm and deformable, and pressed into the mold, which forms the final shape of the container.

Due to the special undulating or rib-formed outer shape of the central mandrel the hollow preform tube already receives the inner ribs which are preserved during the blow molding operation / blow molding step and which are present in the final container.

In the blow molding step / blow molding operation, the extruded material of the extruded hollow preform tube is still warm enough to be deformed by the blowing nozzle, but the inner ribs are still strong enough to withstand this deformation so that they are still sufficiently present inside of the container after the opening of the mold / demolding and after the cooling.

By this manufacturing method / apparatus the containers can be manufactured significantly cheaper than by a process of injection molding and welding of two pieces together, which might be used alternatively in order to manufacture such containers.

The cheap manufacturing cost justify that the container is disposable and might be recycled.

For the manufacturing method of claim 14 and for the manufacturing apparatus of claim 15, the advantages and embodiments apply that have been described above with respect to the container, with respect to the planetary mixing system and with respect to the method for dissolving and/or homogeneously distributing tablets or capsules in a liquid such as water or syrup. They are not repeated here for brevity.

According to an embodiment of the manufacturing method / manufacturing apparatus, in step (e), a blow molding nozzle is inserted into an inlet/outlet portion of the top portion of the container to blow gas/air into the extruded hollow preform tube. This has the side effect that the inner surface of the inlet/outlet portion is formed without inner ribs.

According to a further embodiment of the manufacturing method / manufacturing apparatus, the upper portion of the at least two parts of the mold define the shape of the top portion of the container, including an inlet/outlet portion, in particular comprising an outer thread.

According to a further embodiment of the manufacturing method / manufacturing apparatus, the middle and lower portions of the at least two parts of the mold define the shape of the wall portion and bottom portion of the container.

Although the present embodiment has been described with respect to a substantially cylindrical shape of the container, the invention is not limited thereto. Also containers having other shapes, for example the shape of a truncated cone or a funnel shape, are comprised by the present invention.

With some shapes it might be appropriate to attach a foot to the bottom of the container to make the container stable.

The containers as described herein and the planetary mixing systems as described herein are to be used to mix pharmaceutical compositions in pharmacies or the like.

The container as described herein can also be referred to as mill bottle or as mill container.

The invention is further described below by means of embodiments with reference to the attached figures.
Figure 1 shows a schematic side view of a container for dissolving and/or homogeneously distributing tablets or capsules in a liquid such as water or syrup, according to an exemplary embodiment of the invention;
Figure 2 is a schematic illustration of the mixing process, in particular the revolution and rotational movements of the container of figure 1 in a planetary mixing system, according to an exemplary embodiment of the invention;
Figure 3 shows a schematic side view of the container of figures 1 and 2, wherein the inner ribs of the container are visible;
Figure 4 shows a schematic perspective view of the container of figures 1 to 3, wherein the inner ribs of the container are visible;
Figure 5 shows a schematic top view of the container of figures 1 to 4, wherein the inner ribs of the container are visible;
Figure 6 shows an isolated top view of the bottom part of the container of figures 1 to 5; and
Figure 7 shows the manufacturing steps of a method and an apparatus for manufacturing a container for dissolving and/or homogeneously distributing tablets or capsules in a liquid such as water or syrup, according to a further embodiment of the invention.

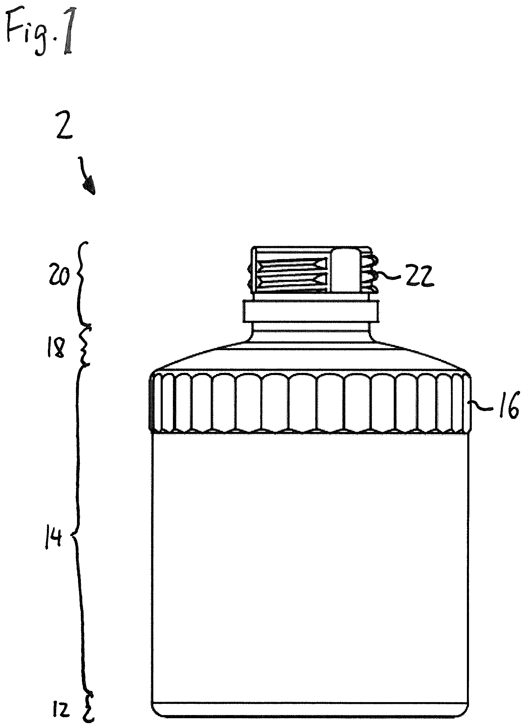

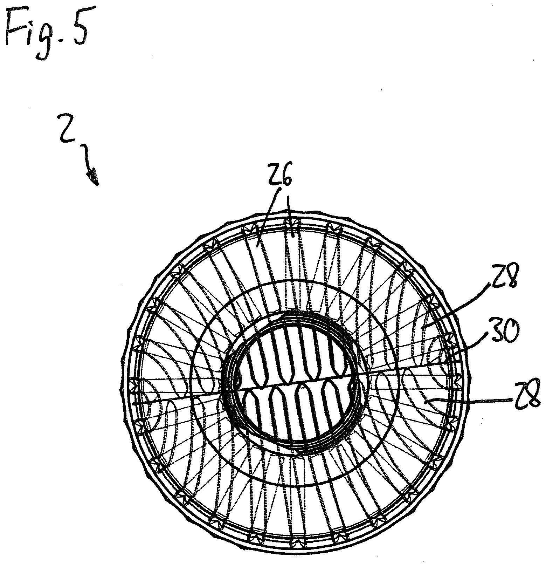

The container shown in figures 1 to 5 comprises, from bottom to top, a bottom portion 12, a substantially cylindrical wall portion 14, a top portion 18 and an inlet/outlet portion 20.

In an embodiment which is not shown here, the bottom portion 12 can be formed as a round plate which can be moved upwards/downwards in order to facilitate taking the medium out of the container 2.

The substantially cylindrical wall portion 14 encloses the inner space of the container 2 laterally, and is provided, at its upper end with a contoured outer holding section 16 which is configured to be held by a corresponding holding section of a holding unit, for example a holding unit of a planetary mixing system. In the non-limiting embodiment of figure 1, the contoured outer holding section 16 is formed as a pattern of longitudinal outer indentations and protrusions in the upper outer end section of the wall portion 14.

The top portion 18 extends between the upper circumferential edge of the wall portion 14 to the central inlet/outlet portion 20, and is slightly inclined upwardly.

The top portion 18 and the wall portion 14 are integrally formed, without a circumferential welding seam, which is often present in conventional containers.

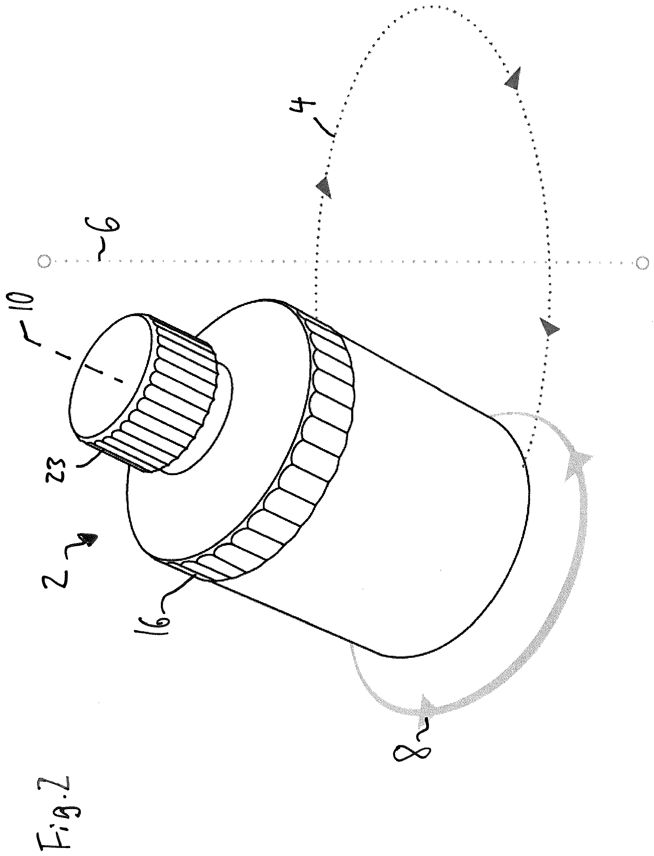

The inlet/outlet portion 20 has a substantially tubular shape, is integrally formed with the top portion 18, joins at the inner circumferential edge of the top portion 18, and extends away from the inner space of the container 2. It is provided with an external thread 22 or external thread sections 22 as can be seen in figure 1, to which a cap or lid 23 can be screwed in order to close the inlet/outlet section 20, as can be seen in figure 2.

Figure 2 shows the functional principle of a mixing process of planetary mixing system.

The container 2 is held by a cup-like holding unit (not shown) which is configured for receiving and holding the container 2. This holding unit is arranged eccentrically on a substantially horizontal rotating wheel (not shown) and spaced apart from the center of the rotating wheel.

The holding unit is arranged and configured such that the container is received and held such that its vertical axis includes an angle with a vertical plane. In the non-limiting embodiment of figure 2, this angle is about 25 to 30°.

At least one drive unit (not shown) imparts a revolution movement to the rotating wheel and imparts a rotational movement to the holding unit. The revolution movement of the rotating wheel is in an opposite direction to the rotational movement of the holding unit.

In the non-limiting embodiment of figure 2, the revolution movement is shown by a dotted circular line with arrows, in a clockwise direction, and the rotational movement is shown by a solid circular line with arrows, in a counterclockwise direction.

By the revolution and rotation movements of the container 2, a centrifugal force is exerted on the material within the container 2 to be mixed, so that it is mixed homogeneously.

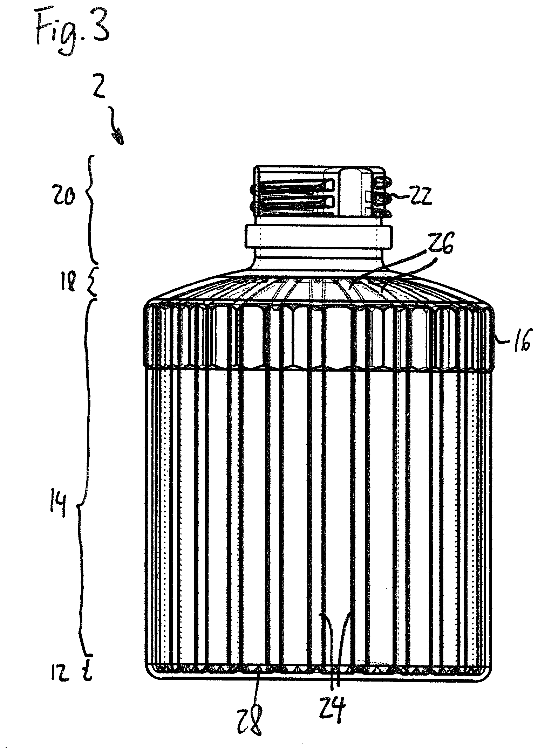

In figure 3, the container 2 is shown, with inner ribs 24 of the wall portion 14, inner ribs 26 of the top portion 18, and inner ribs 28 of the bottom portion 12 being visible from outside. This can for example be the case if the container 2 is made of transparent plastics material.

The inner ribs 24 of the wall portion 14 are formed as inner longitudinal ribs, which extend over the entire inner height of the wall portion 14, and which have a straight shape. In an alternative embodiment which is not shown here, the inner ribs 24 of the wall portion 14 can also have a slightly curved shape.

The inner ribs 24 of the wall portion 14 are distributed, particularly evenly and/or equidistantly, over the inner surface of the wall portion.

The inner ribs 26 of the top portion 18 extend in a radial direction, seen in a top view of the container 2, between a upper circumferential edge of the top portion 18, to which the wall portion 14 joins, to an inner circumferential edge of the top portion 18, to which the inlet/outlet portion 20 joins.

The inner ribs 26 of the top portion 18 have a straight form, seen in a top view of the container 2. In an alternative embodiment which is not shown here, the inner ribs 26 of the top portion 18 can also have a slightly curved shape.

The inner ribs 26 of the top portion 18 are distributed, particularly evenly and/or equidistantly, over the inner surface of the top portion 18.

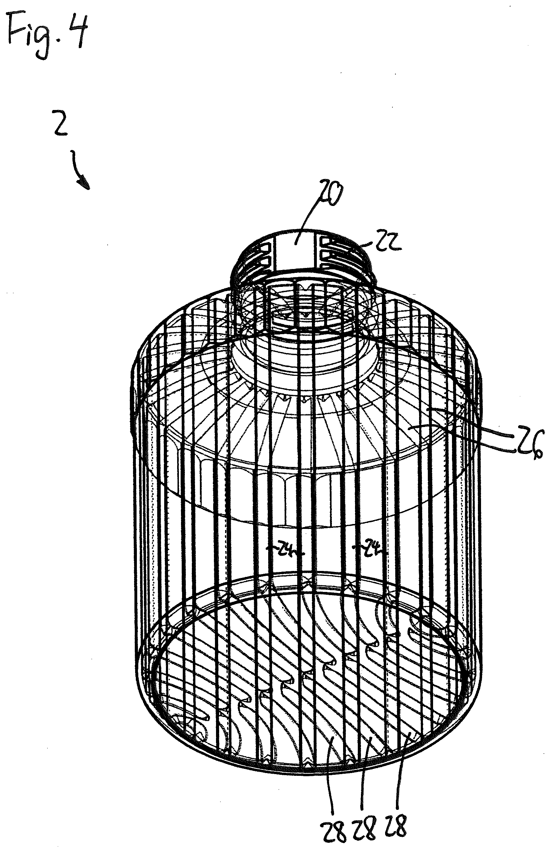

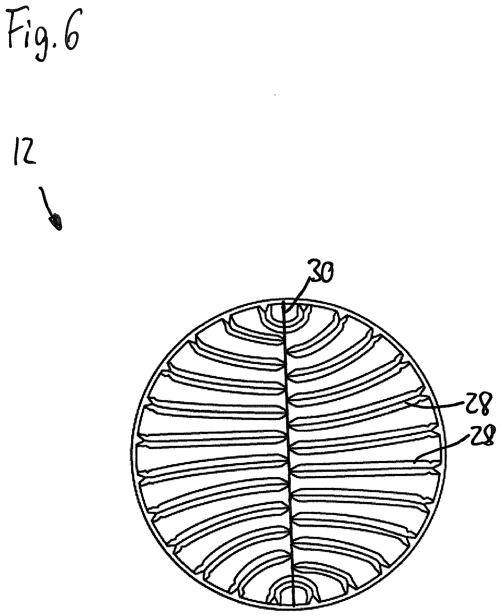

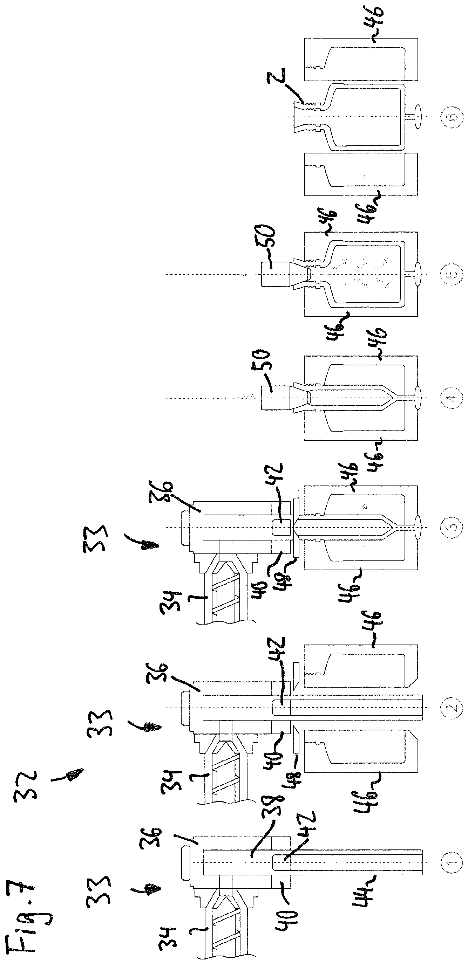

As can well be seen in figures 4, 5 and 6, the inner ribs 28 of the bottom portion 12 extend from a sectional line 30 of the bottom portion 12, to an outer circumferential edge of the bottom portion 12, to which the wall portion 14 joins. The sectional line 30 of the bottom portion 12 divides the bottom portion 12 into two semicircular parts of about the same size. The sectional line 30 is formed by step number 3 of figure 7, as will be explained further below.

The inner ribs 28 of the bottom portion 12 extending from a respective outer portion of the sectional line 30 in particular have a curved form, seen in a top view, whereas the inner ribs 28 of the bottom portion 12 extending from a middle portion of the sectional line 30 in particular have a straight or only slightly curved form, seen in a top view.

The inner ribs 28 of the bottom portion 12 extending from a respective outer portion of the sectional line 30 have a shorter length than the inner ribs 28 of the bottom portion 12 extending from a middle portion of the sectional line 30.

In the non-limiting embodiment of figure 3, the container 2 comprises a total number of 24 inner ribs 24 of the wall portion 14, 24 inner ribs 26 of the top portion 18, and 24 inner ribs 28 of the bottom portion 12.

The inner ribs 26 of the top portion 18 and the inner ribs 28 of the bottom portion 12 are aligned with the respective inner ribs 24 of the wall portion 14. In order words, adjacent inner ribs 28 of the bottom portion 12, adjacent inner ribs 24 of the wall portion 14, and adjacent inner ribs 26 of the top portion 18 form continuous inner ribs, which extend from an inner circumferential edge of the top portion 18, to which the inlet/outlet portion 20 joins, to the sectional line 30 of the bottom portion 12.

The inner surface of the inlet/outlet portion 20 is formed without inner ribs.

The inner ribs 24, 26, 28 can have a width of 1 to 10 mm, and a height, measured from the inner surfaces of the wall portion 14, of the top portion 18 and of the bottom portion 12 of 1 to 5 mm.

By these inner ribs 24, 26, 28, the tablets/capsules can be grinded effectively.

The manufacturing steps of a method and the manufacturing units and their operation of an apparatus for manufacturing a container 2 for dissolving and/or homogeneously distributing tablets or capsules in a liquid such as water or syrup, are now described with respect to figure 7.

The apparatus 32 for manufacturing a container 2 for dissolving and/or homogeneously distributing tablets or capsules in a liquid such as water or syrup, comprises an extrusion unit 33 with an extruder 34, a deflecting head 36, and an extrusion die 40 having a central mandrel 42.

The apparatus 32 further comprises a mold 46 comprising at least two parts, a cutting unit 48, and a blow molding nozzle 50

At position 1/in step 1, the extruder 34 heats and extrudes plastics material, which is supplied to the extruder 34 for example as granular plastics material, into the deflecting head 36, from which it is extruded through the extrusion die 40 and its central mandrel 42. Thus a hollow preform tube 44 is formed.

The central mandrel 42 of the extrusion die 40 has an undulating or rib-formed outer shape. Thus inner ribs are formed to the extruded hollow preform tube 44.

At position 2/in step 2, the at least two parts of the mold 46 are positioned around the extruded hollow preform tube 44. The at least two parts of the 46 mold define the final shape of the container 2.

At position 3/in step 3, the at least two parts of the mold 46 are closed around the extruded hollow preform tube 44. The bottom ends of the extruded hollow preform tube 44 are pressed together, to close and seal the bottom end of the extruded hollow preform tube 44 forming a circular bottom portion 12 comprising a sectional line 30. This sectional line 30 forms a straight diameter line that reaches from one point on the edge of the circular bottom portion 12 through its centre, to a point on the opposite edge. This sectional line 30 can also be referred to as welding seam or connection seam. Here the hose-formed extruded hollow preform tube 44 is pressed together in one place, like with pliers. At the sectional line 30, the bottom end of the extruded hollow preform tube 44 is firmly closed and sealed. By blowing in the gas/air at position 5/in step 5, the extruded hollow preform tube 44 is then pushed outwards/against the inner wall of the mold 46.

The outer shape of the upper end of the at least two parts of the mold 46 press the upper ends of the extruded hollow preform tube 44 together, forming the inlet/outlet portion 20 and its external thread/thread section 22.

At position 4/in step 4, the cutting unit 48 cuts the upper end of the extruded hollow preform tube 44, at a position above the inlet/outlet portion 20.

At position 5/in step 5, the blow molding nozzle 50 is inserted into the upper end of the extruded hollow preform tube 44 and blows gas/air into the extruded hollow preform tube 44 through its upper end, such that the extruded hollow preform tube is blown to a container 2 having an outer shape corresponding to the inner shape of the at least two parts of the mold 46.

In the blow molding step / blow molding operation, the extruded material of the extruded hollow preform tube 44 is still warm and deformable enough to be deformed by the blowing nozzle 50. It is pressed into the mold 46, which forms the final shape of the container 2.

In particular, the extruded hollow preform tube 44 is formed to the shape of the container 2 as shown in figures 1 to 5, comprising, from bottom to top, a bottom portion 12, a substantially cylindrical wall portion 14, a top portion 18 and an inlet/outlet portion 20.

The inner ribs which have been formed by the central mandrel 42 of the extrusion die 40 are still strong enough to withstand this deformation. The inner ribs are preserved during this blow molding operation / blow molding step and are present in the final container 2 as inner ribs 24 on the wall portion 14, as inner ribs 28 on the bottom portion 12, and as inner ribs 26 on the top portion 18, as they are depicted in figures 3, 4 and 5.

Since the blow molding nozzle 50 is inserted into the upper end of the extruded hollow preform tube 44, the inner surface of the inlet/outlet portion 20 is formed without inner ribs.

At position 5/in step 5, the blow molding nozzle 50 is moved away, the at least two parts of the mold 46 are opened, the container 2 cools down, and is finally removed. The material at the lower end of the container 2 is deburred.

### List of reference numerals

- 2: container
- 4: revolution movement
- 6: vertical axis
- 8: rotational movement
- 10: inclined axis
- 12: bottom portion
- 14: wall portion
- 16: contoured outer holding section
- 18: top portion
- 20: inlet/outlet portion
- 22: external thread
- 23: cap/lid
- 24: inner ribs of wall portion
- 26: inner ribs of top portion
- 28: inner ribs of bottom portion
- 30: sectional line
- 32: manufacturing apparatus/method
- 33: extrusion unit
- 34: extruder
- 36: deflecting head
- 38: extrudate
- 40: extrusion die
- 42: central mandrel
- 44: extruded hollow preform tube
- 46: mold parts
- 48: cutting unit
- 50: blowing nozzle

## Claims

1. Container (2) for dissolving and/or homogeneously distributing tablets or capsules in a liquid such as water or syrup, comprising
a bottom portion (12),
a wall portion (14), and
a top portion (18),
the bottom portion (12), the wall portion (14), and the top portion (18) enclosing an inner space of the container (2),
**characterized in that**
the wall portion (14) comprises inner ribs (24).

2. Container (2) of claim 1,
**characterized in that**
the inner ribs (24) of the wall portion (14) extend at least over a substantial part of the inner height of the wall portion (14), particularly over the entire height of the inner surface of the wall portion (14); and/or
the inner ribs (24) of the wall portion (14) are formed as inner longitudinal ribs; and/or
the inner ribs (24) of the wall portion (14) have a straight or slightly curved shape.

3. Container (2) of claim 1 or 2,
**characterized in that**
the inner ribs (24) of the wall portion (14) are distributed, particularly evenly and/or equidistantly, over the inner surface of the wall portion (14).

4. Container (2) of any of the preceding claims,
**characterized in that**
at least one of the bottom portion (12) and the top portion (18) also comprises inner ribs (28, 26).

5. Container (2) of claim 4,
**characterized in that**
the inner ribs (28) of the bottom portion (12) and the top portion (18) are aligned with the respective inner ribs (24) of the wall portion (14); and/or
at least some of the inner ribs (28) of the bottom portion (12), of the inner ribs (24) of the wall portion (14) and of the inner ribs (26) of the top portion (18) form continuous inner ribs.

6. Container (2) of any of claim 4 or 5,
**characterized in that**
the inner ribs (28) of the bottom portion (12) extend from a sectional line, in particular from a sectional line (30) of the bottom portion (12), to an outer circumferential edge of the bottom portion (12) to which the wall portion (14) joins; and/or
the inner ribs (28) of the bottom portion (12) extending from a respective outer portion of the sectional line (30) in particular have a curved form, seen in a top view; and/or
the inner ribs of the bottom portion (12) extending from a middle portion of the sectional line (30) in particular have a straight or only slighty curved form, seen in a top view; and/or
the inner ribs (28) of the bottom portion (12) extending from a respective outer portion of the sectional line (30) have a shorter length than the inner ribs (28) of the bottom portion (12) extending from a middle portion of the sectional line (30).

7. Container (2) of any of claim 4 to 6,
**characterized in that**
the inner ribs (26) of the top portion (18) extend in a radial direction, seen in a top view of the container (2), between a upper circumferential edge of the top portion (18), to which the wall portion (14) joins, to an inner circumferential edge of the top portion (18), to which the inlet/outlet portion (20) joins; and/or
the inner ribs (26) of the top portion (18) extending from the edge of the inlet/outlet portion (20) in particular have a straight of only slightly curved form, seen in a top view of the container (2).

8. Container (2) of any of the preceding claims,
**characterized in that**
a continuous connection seam or welding seam extends over the bottom portion (12), in particular as a straight diameter line that reaches from one point on the edge of the bottom portion (12) through its centre, to a point on the opposite edge, over opposing areas of the outer surface of the wall portion (14), in particular in longitudinal direction, and over the top portion (18), in particular in radial direction; and
the top portion (18) and the wall portion (14) are integrally formed, without a circumferential welding seam.

9. Container (2) of any of the preceding claims,
**characterized in that**
the top portion (18) comprises an inlet/outlet portion (20) extending away from the inner space of the container (2);
the inlet/outlet portion (20) comprising at least one of the following features:
a substantially tubular shape;
an external thread (22), and/or
an inner surface formed without inner ribs;
and/or
the container (2) further comprising a cap or lid (23), in particular an internally threaded cap or lid (23), such that the inner space of the container (2) can be closed by screwing the internally threaded cap or lid (23) onto the external threaded inlet/outlet portion (20).

10. Container (2) of any of the preceding claims,
**characterized in that**
the wall portion (14) has a cylindrical, conical, oval, belly-formed, convex or concave outer shape; and/or
the wall portion (14) comprises a contoured outer holding section (16) configured to be held by a corresponding holding section of a holding unit of a planetary mixing system; and/or
the wall portion (14) comprises a scale at its outer surface.

11. Planetary mixing system, comprising
a holding unit configured for receiving and holding a container (2) according to any of the preceding claims, the holding unit being arranged eccentrically on a rotating wheel and spaced apart from the center of the rotating wheel;
at least one drive unit configured to impart a revolution movement to the rotating wheel and to impart a rotational movement to the holding unit; and
wherein at least one drive unit is configured to impart the revolution movement of the rotating wheel in an opposite direction to the rotational movement of the holding unit.

12. Planetary mixing system of claim 11,
wherein the rotating wheel is arranged substantially horizontally; and/or
wherein the holding unit is arranged and configured such that the container (2) is received and held such that its vertical axis includes an angle with a vertical plane, in particular an angle of 5 to 50°, in particular 25 to 30° with a vertical plane.

13. Method for dissolving and/or homogeneously distributing tablets or capsules in a liquid such as water or syrup, using a container (2), in particular according to any of claims 1 to 10, and a planetary mixing system, in particular according to claim 11 or 12,
putting tablets or capsules and a liquid such as water or syrup into a container (2);
imparting a revolution movement and, in an opposite direction, a rotational movement to the container (2);
grinding the tablets or capsules at the inner ribs (24, 26, 28) of the container (2) in order to dissolve and/or homogeneously distribute them in the liquid.

14. Method for manufacturing a container (2) for dissolving and/or homogeneously distributing tablets or capsules in a liquid such as water or syrup, in particular according to any of claims 1 to 10, the method comprising the steps of:
(a) extruding a hollow preform tube (44), using an extruder (33, 34) with an extrusion die (40) having a central mandrel (42);
the central mandrel (42) of the extrusion die (40) having an undulating or rib-formed outer shape, configured to form inner ribs (24, 26, 28) to the extruded hollow preform tube (44);
(b) positioning at least two parts of a mold (46) around the extruded hollow preform tube (44);
the at least two parts of the mold (46) defining the final shape of the container (2);
(c) closing the at least two parts of the mold (46) around the extruded hollow preform tube (44) and pressing the bottom end of the extruded hollow preform tube (44) together, to close and seal the bottom end of the extruded hollow preform tube (44);
(d) cutting the upper end of the extruded hollow preform tube (44);
(e) blow molding the extruded hollow preform tube (44) to a container (2) having an outer shape corresponding to the inner shape of the at least two parts of the mold (46), by blowing gas/air into the extruded hollow preform tube (44) through its upper end; and
(f) opening the at least two parts of the mold (46), letting the container (2) cool down, and removing the container (2).

15. Apparatus for manufacturing a container (2) for dissolving and/or homogeneously distributing tablets or capsules in a liquid such as water or syrup, in particular according to any of claims 1 to 10, comprising:
(a) an extruder (33) with an extrusion die (40) having a central mandrel (42), for extruding a hollow preform tube (44); the central mandrel (42) of the extrusion die (40) having an undulating or rib-formed outer shape, configured to form inner ribs (24, 26, 28) to the extruded hollow preform tube (44);
(b) at least two parts of a mold (46) configured to be positioned around the extruded hollow preform tube (44); the at least two parts of the mold (46) defining the final shape of the container (2); and
(c) wherein the at least two parts of a mold (46) are further configured to be closed around the extruded hollow preform tube (44) and to press the bottom end of the extruded hollow preform tube (44) together, to close and seal the bottom end of the extruded hollow preform tube (44);
(d) a cutting unit (48) configured to cut the upper end of the extruded hollow preform tube (44);
(e) a blow molding nozzle (50) configured to blow mold the extruded hollow preform tube (44) to a container (2) having an outer shape corresponding to the inner shape of the at least two parts of the mold (46), by blowing gas/air into the extruded hollow preform tube (44) through its upper end; and
(f) wherein the at least two parts of the mold (46) are further configured to open, to let the container (2) cool down, and to remove the container (2).
